# EUROPÄISCHE PATENTSCHRIFT

(11) **EP 3 492 255 B1**
(45) Veröffentlichungstag und Bekanntmachung des Hinweises auf die Patenterteilung: **22.07.2020**
(21) Anmeldenummer: 18209067.0
(22) Anmeldetag: 29.11.2018
(51) Int. Cl.: B30B 11/22, B29C 48/40, B29C 48/02, B29C 48/03, B29C 48/355, B29C 48/693, B29K 105/26

(54) **EXTRUDATABTRAGSVORRICHTUNG FÜR EINEN EXTRUDER ZUR VERARBEITUNG VON SUBSTRATEN AUS ORGANISCHEN REST- UND ROHSTOFFEN**
EXTRUDATE REMOVAL DEVICE FOR AN EXTRUDER FOR PROCESSING SUBSTRATES FROM ORGANIC RESIDUAL AND RAW MATERIALS
DISPOSITIF D'ENLÈVEMENT D'EXTRUDAT POUR UNE EXTRUDEUSE DESTINÉ À TRAITER DES SUBSTRATS À PARTIR DES SUBSTANCES ORGANIQUES ET DES MATIÈRES PREMIÈRES

(30) Priorität: 29.11.2017 DE 202017107282 U
(43) Veröffentlichungstag der Anmeldung: 05.06.2019
(73) Patentinhaber: Averkamp, Matthias, 46359 Heiden (DE)
(72) Erfinder: Averkamp, Matthias, 46359 Heiden (DE)
(74) Vertreter: Tarvenkorn, Oliver

(56) Entgegenhaltungen:
- EP-A1- 0 680 820
- EP-A1- 3 199 014
- DE-U1-202017 107 282
- JP-A- H11 300 736
- US-A- 2 144 055
- US-A- 5 478 511

## Beschreibung

Die Erfindung betrifft eine Extrudat-Abtragsvorrichtung für einen Extruder zur Verarbeitung von Substraten aus organischen Rest- und Rohstoffen, mit den Merkmalen des Oberbegriffs des Anspruchs 1.

Ein solcher Extruder ist aus der DE 10 2012 208 647 A1 bekannt. Der Doppelschneckenextruder mit gegenläufig ineinander kämmenden Extruderschneckenwellen zieht zerkleinerte Rohstoffe wie insbesondere Holzhackschnitzel ein und fasert sie in den Kammern der Extruderschneckenwellen auf. Die Fasern werden zudem mittels der Extruderschneckenwellen zu zwei Auslassöffnungen an der Stirnseite, vor den Spitzen der Extruderschneckenwellen, gefördert und dort ausgestoßen. Der Ausstoß erfolgt durch zwei Lochmatrizenelemente, welches eine Vielzahl von kleinen Auslassausnehmungen aufweist. Durch die Förderung gegen das Lochmatrizenelement wird ein Staudruck in der Extruderbohrung erzeugt, durch den eine feine Zerfaserung des Rohmaterials erreicht wird. Grobe Partikel können die Ausnehmungen im Lochmatrizenelement nicht passieren und werden aufgrund des Förderdrucks des Extruders spätestens beim Durchpressen durch das Lochmatrizenelement zerkleinert. Mit dem Extruder werden weiche Büschel von Holzfasern oder andere Arten von Fasern erhalten, die einen stark aufgelockerten Verbund mit einer etwa bis dreieinhalbfachen Volumenvergrößerung gegenüber dem Rohstoff bilden und die zudem stark saugfähig z. B. für Wasser und andere Flüssigkeiten ist. Das so erhaltene Extrudat wird unter anderem als Einstreu für Tiere, als Torfersatzstoff in Kompost- und Blumenerden sowie Substraten im Gartenbau, als Biodünger, als Dämmmaterial für die Bauwirtschaft, als Verpackungsmaterial, als Trägermaterial für andere Flüssigkeiten verwendet.

Bei der Produktion mit dem bekannten Extruder ist einerseits eine sehr hohe Antriebsleistung erforderlich, um die für einen wirtschaftlichen Betrieb erforderliche Austragsleistung erzielen zu können. Daher müssen die Extruderschneckenwellen zum Teil von einem für Baumaschinen ausgelegten Dieselmotor angetrieben werden, weil bei der Verwendung von Elektromotoren normale Nennstromstärken von elektrischen Gebäudeinstallationen überschritten werden.

Ein weiterer Nachteil besteht darin, dass zwar durch die Zerfaserung zwischen den Extruderschneckenwellen und beim Durchpressen durch das Lochmatrizenelement der Partikeldurchmesser reduziert wird, jedoch nicht die Partikellänge. Somit kann das Extrudat splitterartige Reste von nicht aufgefaserten Rohstoffen enthalten, die gerade bei der Verwendung als Einstreu nachteilig sind.

Aus der US 5 478 511 A ist eine extruderartige Vorrichtung bekannt, bei der auf einem endseitigen Absatz der Extruderschnecke eine Ringscheibe angeordnet ist. Diese ist so im Bereich der Mündung der Extruderbohrung angeordnet, dass sich ein schmaler Spalt zwischen dem Gehäuseende und der Ringscheibe ausbildet und das Extrudrat durch diesen Spalt ausgepresst wird. Grobe, unzerkleinerte Partikel können sich in diesem Spalt festsetzen und die Austragswege blockieren.

Die Aufgabe der Erfindung besteht darin, splitterartige Reste von nicht aufgefaserten Rohstoffen in dem Extrudat zu vermeiden.

Diese Aufgabe wird durch eine Extrudat-Abtragsvorrichtung mit den Merkmalen des Anspruchs 1 gelöst, welche an einem für die Substratverarbeitung geeigneten Extruder nachträglich ergänzt werden kann oder direkt als fertige Einheit mit dem Extruder zusammen bereitgestellt werden kann.

Unter einem Extruder wird erfindungsgemäß eine Verarbeitungs- und Austragsvorrichtung verstanden, die einen Strang eines Substrats kontinuierlich nach außen fördert. Darin eingeschlossen sind auch Extruder, die in Schubumkehr wirken und unter dem Markennamen RETRUDER ® bekannt sind.

Die Erfindung beruht auf einem überraschenden Effekt, der nicht nur die genannte Aufgabe löst, sondern den weiteren Vorteil einer ganz erheblichen Reduzierung der Antriebsleistung bei guter Austragsleistung mit sich bringt.

Diese Vorteile werden durch die nach der Erfindung vorgesehene Extrudat-Abtragsvorrichtung mit wenigstens einer rotierenden Abtragsscheibe erreicht, die vor den Auslassausnehmungen des Extruders angeordnet wird. Die Abtragsscheibe besitzt eine strukturierte Oberfläche, das heißt, es sind darauf Vertiefungen und Erhebungen mit einer Höhendifferenz von mindestens 1 mm, vorzugsweise 5mm bis 15mm auf derjenigen Oberfläche ausgebildet, welche der Außenseite des Lochmatrizenelements gegenüberliegend angeordnet ist. Vorzugsweise besitzt die Abtragsscheibe eine Struktur wie ein Waffeleisen.

Zwischen der rotierenden oder vibrierenden Abtragsscheibe und dem Lochmatrizenelement am Extruder wird ein Luftspalt ausgebildet, der vorzugsweise über eine Längenverstelleinrichtung einstellbar ist und insbesondere etwa 5 mm bis 20 mm beträgt.

Die Erfindung nutzt den bei einem geeigneten Typ von Doppelschneckenextruder bei der Verarbeitung von Naturfasern bestehenden Effekt, dass ein stoßweiser Ausstoß des Extrudats durch das Lochmatrizenelement erfolgt. Das Extrudat wird also bereits mit einem gewissen Impuls auf die Abtragsscheibe zu bewegt und von dieser bei Kontakt sofort zur Seite gerissen. Dadurch werden nicht aufgefaserte Reststoffe aufgebrochen, so dass die Partikelgröße von im Faserbündel verbleibenden Feststoffresten deutlich reduziert werden kann und in der Regel nur noch bis zu 1 mm beträgt.

Da alle Fasern miteinander verhakt sind und schon aufgrund ihrer Länge als Büschel und nicht als leicht separierbare Einzelfasern ausgestoßen werden, wird mit der erfindungsgemäß vorgesehenen Extrudat-Abtragsvorrichtung außerdem erreicht, dass die stoßweise austretenden Büschel von der Abtragsscheibe erfasst und seitlich weggerissen werden. Dabei werden die Faserbüschel auch aus den Öffnungen im Lochmatrizenelement herausgezogen. Die Öffnungen des Lochmatrizenelements werden deutlich schneller freigegeben, als dies allein durch den Förderdruck der Extruderschneckenwellen möglich wäre. Hierdurch ergibt sich eine höhere Ausstoßrate, die den Betrieb des Extruders deutlich wirtschaftlicher macht.

Aufgrund der sich einstellenden höheren Ausstoßrate kann die Antriebsleistung bei gleicher Ausstoßrate auch reduziert werden, wodurch ebenfalls ein wirtschaftlicher Vorteil gegeben ist. Eine Umrüstung des Extruderantriebs auf einen elektrischen Antrieb ist nunmehr möglich. Durch einen nach der Erfindung mit der Extrudat-Abtragsvorrichtung ausgerüsteten Extruder kann eine Austragsleistung von 30 m³ / h bis 34 m³ / h bei einer elektrischen Antriebsleistung von P = 110 kW erreicht werden. Bei einem aus dem Stand der Technik bekannten Extruder hingegen mit gleichartiger Schneckenkonfiguration und gleichen Lochmatrizenelementen hingegen wurde mit einem Dieselmotor als Antrieb mit einer Leistung von P = 250 kW nur eine Austragsleistung von etwa 17 m³ / h erreicht.

Die erfindungsgemäßen Effekte werden sowohl mit einer rotierenden wie auch mit einer schwingenden Abtragsscheibe erreicht, sofern bei letzterer der Hub und die Schwingfrequenz ausreichend groß sind, um eine zur Seite gerichtete Beschleunigung des austretenden Faserbüschels zu bewirken.

Eine zusätzliche Fördereinrichtung unterhalb der Abtragsscheibe ist vorteilhaft, um das Extrudat aus dem Nachbehandlungsbereich heraus zu fördern. Die Fördereinrichtung kann ein seitlich weglaufendes Förderband umfassen.

Für die bevorzugte Ausbildung, bei der der Abstand zwischen der Abtragsscheibe und der Lochmatrize einstellbar ist, umfasst die Extrudat-Abtragsvorrichtung eine Abstandsverstelleinrichtung. Nach einer bevorzugten Ausführungsform besitzt die Abstandsverstelleinrichtung ein Basiselement, das direkt am Extrudergehäuse montierbar ist und das wenigstens zwei, insbesondere vier Führungsachsen besitzt. Die Wellen mit den Abtragsscheiben und die Antriebe dafür sind an einer Basisplatte gelagert, die Führungsbuchsen aufweist, so dass die gesamte Einheit der Basisplatte und der Wellen, Lager und Antrieben auf den Führungsachsen gelagert ist. Die Verstellung erfolgt insbesondere über ein angetriebenes Linearaktorelement wie einen Hydraulik- oder Pneumatikzylinder. Dieser ist bevorzugt ebenfalls an der Basisplatte gelagert und stützt sich mit dem Kolben am extruderseitig zu montierenden Basiselement ab.

Die Extrudat-Abtragsvorrichtung nach der Erfindung kann nicht nur zur Nachrüstung bestehender Extruder verwendet werden, sondern auch eine speziell abgestimmte Einheit mit einem Extruder bilden, die in Anspruch 7 angegeben ist.

Vorteilhaft ist bei einem solchermaßen ausgerüsteten Extruder, wenn die Extrudat-Abtragsvorrichtung eine Abstandsverstelleinrichtung besitzt und das wenigstens eine Lochmatrizenelement direkt am Basiselement angeordnet ist. Damit wird insbesondere die planparallele Ausrichtung zwischen Abtragsscheibe und Lochmatrize erleichtert.

Vorteilhaft ist es dabei, zumindest die Außen- und / oder Innenseite des Lochmatrizenelements ebenfalls mit einem Relief strukturiert auszubilden und das Lochmatrizenelement zudem innerhalb einer Senkung an der Extruder-Stirnseite anzuordnen. Die rotierende Abtragsscheibe kann zumindest teilweise in die Senkung eingreifen, so dass zwischen den beiden strukturierten Oberflächen eine Art Mühlsteineffekt erreicht wird.

Besonders vorteilhaft ist es, das Lochmatrizenelement beidseitig mit einer Reliefstruktur zu versehen, so dass auch bereits vor dem Durchgang des Substrats durch die Ausnehmungen im Lochmatrizenelement eine Auflockerung erfolgt.

Eine bevorzugte Ausführungsform sieht vor, bei einem Extruder mit zwei Extruderschneckenwellen vor jeder Extruderschneckenwelle je ein Lochmatrizenelement und eine Abtragsscheibe mit Welle, Lagerung und Antrieb zu positionieren. Über synchrone, asynchrone oder auch gegenläufige Drehbewegungen der beiden Abtragsscheiben lassen sich besondere Effekte erzielen, um das Extrudat wirksam nachzubehandeln und zur Seite zu befördern.

Eine gute Wirkung wird insbesondere auch durch nur eine einzelne große Abtragsscheibe erreicht, die zum Beispiel einen Durchmesser von über 500 mm besitzt und die die alle Auslassausnehmungen vor beiden Extruderschnecken gemeinsam überstreicht, wozu die Auslassausnehmungen beider Extruderschnecken in einem gemeinsamem Lochmatrizenelement zusammengefasst sind. Abgesehen davon, dass durch nur eine Abtragsscheibe der apparative Aufwand für Lagerung und Antrieb reduziert werden kann, hat die Größe der Mono-Abtragsscheibe den Vorteil, dass die Bahngeschwindigkeiten im Außenumfangsbereich höher sind als bei einer paarweisen Anordnung von wesentlich kleineren Abtragsscheiben nebeneinander, wodurch die Zerfaserung des Extrudats begünstigt wird.

Die Erfindung wird mit weiteren vorteilhaften Ausführungsformen mit Bezug auf das in den Zeichnungen dargestellte Ausführungsbeispiel näher erläutert. Die Figuren zeigen im Einzelnen:
- Fig. 1: eine Extrudat-Abtragsvorrichtung in Ansicht von oben;
- Fig. 2: einen Extruder mit der Extrudat-Abtragsvorrichtung in schematischer, teilweise geschnittener Ansicht von oben;
- Fig. 3: einen Schnitt durch eine Abtragsscheibe und
- Fig. 4: eine Extrudat-Abtragsvorrichtung mit Abstandsverstelleinrichtung in Ansicht von oben;

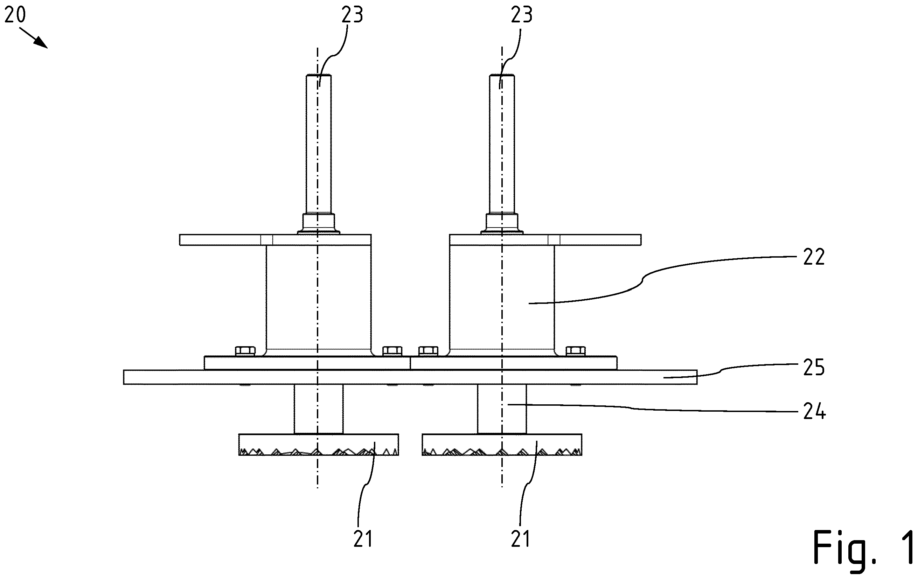

In Figur 1 ist eine Extrudat-Abtragsvorrichtung 20 dargestellt. Diese umfasst zwei Lagereinheiten 22, die an einer gemeinsamen Grundplatte 25 nebeneinander montiert sind. Die Grundplatte 25 bildet hierbei ein Grundgestell, an dem alle anderen für die Funktion der Abtragsvorrichtung erforderlichen Teile befestigt sind.

In den Lagereinheiten 22 sind jeweils Wellen 24 gelagert, die an ihrem einen Ende mit einer auswechselbaren Abtragsscheibe 21 verbunden sind und an ihrem anderen Ende einen Absatz 23 zur Verbindung mit einem Antrieb oder Getriebe ausgebildet sind. Für den Antrieb können Elektromotoren direkt auf das Lagergehäuse aufgesetzt werden. Die Elektromotoren müssen nicht synchronisiert werden müssen. Die Drehrichtung der Abtragsscheiben 21 entspricht grundsätzlich dem derjenigen Extruderschneckenwelle, der die jeweilige Abtragsscheibe 21 zugeordnet ist.

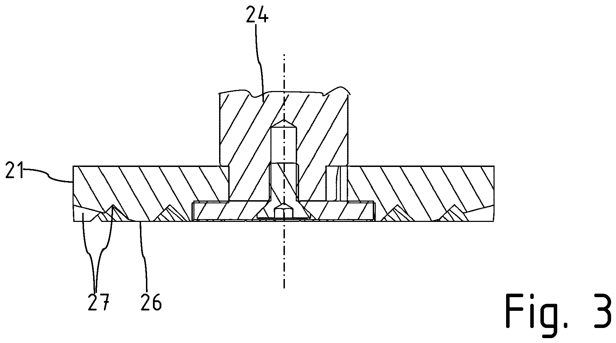

Bereits aus der Ansicht von oben in Figur 1 ist deutlich erkennbar, dass die Oberflächen der Abtragsscheiben 21 jeweils eine tief eingefurchte Makrostruktur besitzen. Dies zeigt auch die vergrößerte Schnittdarstellung in Figur 3. Die Struktur ist in dem gezeigten Ausführungsbeispiel nach Art eines Waffeleisens ausgebildet. Es gibt Rinnen 27 mit V-förmigen Querschnitt, zwischen denen sich pyramidenstumpfförmige Erhebungen 26 ausbilden. Die Rauhtiefe beträgt hierbei 10mm, was der Tiefe der Nuten an der Scheibe 21 entspricht.

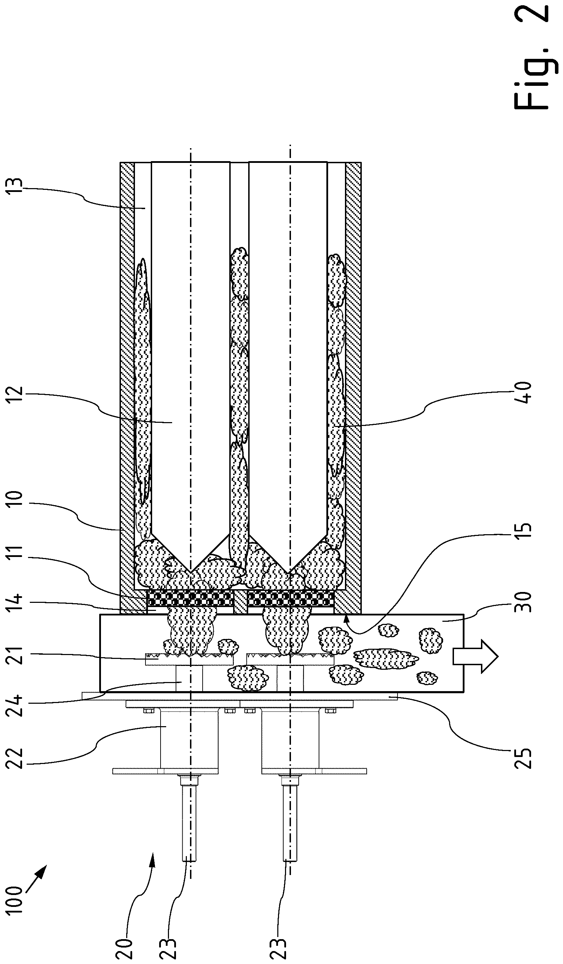

Anhand von Figur 2 wird ein mit einem erfindungsgemäßem Extruder 100 durchgeführtes Herstellverfahren für Einstreu und Holzersatzstoffe erläutert.

Der Extruder 100 besitzt ein Gehäuse 10 mit einer Extruderschneckenbohrung 13, in welcher zwei Extruderschneckenwellen 12 drehbar gelagert sind. Die Extruderschneckenwellen 12 sind hier nur schematisch angedeutet; die Schneckenstege sind nicht gezeichnet. In dem nicht abgebildeten, hinteren Bereich wird der Rohstoff, beispielsweise Holzhackschnitzel, eingezogen und mittels der Extruderschneckenwellen 12 gefördert. In dem abgebildeten, vorderen Bereich des Extruders 100 ist der Rohstoff bereits weitgehend zu komprimierten Faserbüscheln 40 aufgefasert. Diese werden durch Lochmatrizenelemente 11 hindurch gepresst. An einer Stirnseite 15 des Extrudergehäuses 10 ist direkt vor den Lochmatrizenelemente 11 jeweils eine Senkung 14 ausgebildet.

Vor der Stirnseite 15 ist die Extrudat-Abtragsvorrichtung 20 mit den beiden rotierenden Abtragsscheiben 21 angeordnet. Unterhalb der Abtragsscheiben 21 ist eine Auffang- und Fördervorrichtung 30 angeordnet, um die von den Abtragsscheiben 21 herunter fallenden Faserbüschel seitlich abzuführen.

Der in Fig. 2 erkennbare axiale Abstand zwischen den Abtragsscheiben 21 und den Lochmatrizenelementen 11 entspricht einer Ausgangs- oder Reinigungsposition der Abtragsscheiben 21 und wird vor oder während der Produktion deutlich verringert, um die erfindungsgemäß erzielbaren Effekte zu verstärken.

Das Herstellverfahren für Einstreu und Torfersatzstoffe aus Holzhackschnitzeln sieht folgende Schritte vor:
- Aufgabe des Rohstoffs in Form von Holzhackschnitzeln mit einer Partikelgröße von 5 bis 70 mm, durch eine Öffnung im Extrudergehäuse 10 von oben, direkt zwischen die Extruderschneckenwellen 12;
- Auffaserung der Holzhackschnitzel in den Kammern, die zwischen den sich gegenläufig drehenden Extruderschneckenwellen 12 ausgebildet werden und Förderung zu den beiden, jeweils mit einem Lochmatrizenelement 11 verschlossenen Austragsöffnungen vor den Spitzen der Extruderschneckenwellen 12;
- Seitlicher Abtrag der aus den Lochmatrizenelementen 11 austretenden Faserbüschel 40 mittels der Abtragsscheiben 21 und Abförderung aus der Austragszone.

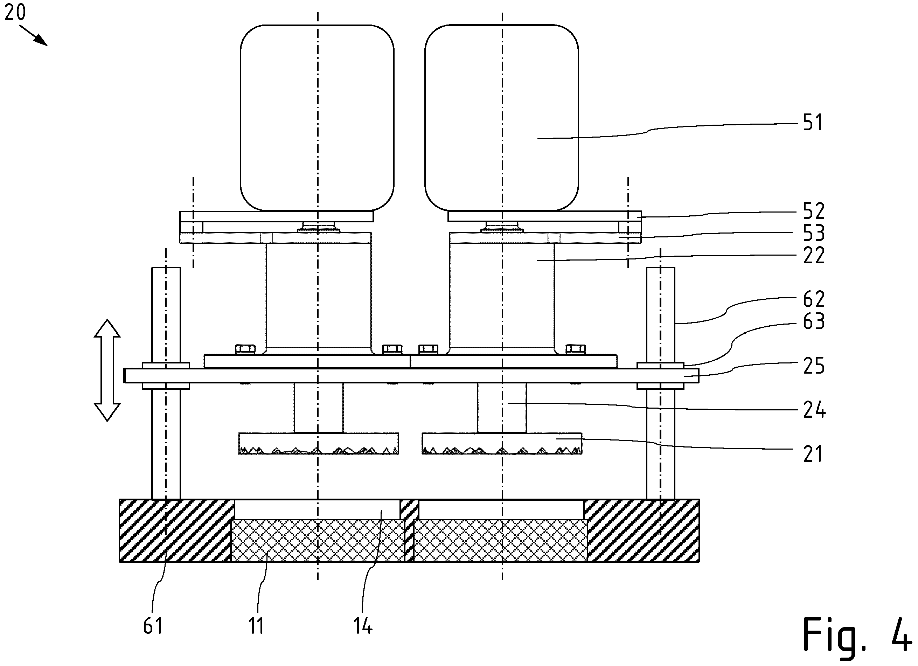

Figur 4 zeigt ein weiteres Beispiel einer Extrudat-Abtragsvorrichtung 20, die ähnlich wie in Figur 1 aufgebaut ist. Das Grundgestell ist hierbei um eine Abstandsverstelleinrichtung ergänzt ist.

Außerdem sind in Figur 4 die Motoreinheiten 51 zum Antrieb der Wellen 24 dargestellt. Die Motoreinheiten 51, die neben dem elektrischen Antrieb auch ein Getriebe enthalten, sind direkt auf die Enden der Wellen 24 aufgesetzt und stützen sich mit ihrem Motorgehäuse über Drehmomentstützen 52, 53 an den Lagereinheiten 22 und darüber an der Grundplatte 25 ab.

Die Abstandsverstelleinrichtung umfasst ein Basiselement 61, das direkt mit dem Extruder zu verbinden ist. Es enthält Ausnehmungen zur Aufnahme der Lochmatrizenelemente 11. Davor befinden sich Senkungen 14, in die die Abtragsscheiben 21 eingreifen können.

Führungsachsen 62 sind mit dem Basiselement 61 fest verbunden. Die Grundplatte 25 ist mit Linearführungsbuchsen 63 versehen, die jeweils auf einer der Führungsachsen 62 verschiebbar angeordnet sind. Dadurch kann die Grundplatte mit den darauf angeordneten Bauteilen linear verschoben werden, und der Abstand der Abtragsscheiben 21 in Bezug auf das Basiselement 61 kann eingestellt werden. Die Verstellung erfolgt insbesondere über ein angetriebenes Linearaktorelement wie einen Hydraulik- oder Pneumatikzylinder, der nicht dargestellt ist. Dieser ist bevorzugt ebenfalls an der Basisplatte gelagert und stützt sich mit dem Kolben an dem extruderseitig zu montierenden Basiselement 61 oder direkt am Extruder ab. Die Anordnung an der Grundplatte hat den Vorteil, dass alle Energie- und Steuerungsleitungen wie z. B. für die Motoren 51 und für das Linearaktorelement zur rückwärtigen Seite, die in Figur 4 oben liegt, weg geführt werden können.

## Patentansprüche

1. Extrudat-Abtragsvorrichtung (20) für einen Extruder (100) zur Verarbeitung von Substraten aus organischen Rest- und Rohstoffen,
wobei die Extrudat-Abtragsvorrichtung (20) wenigstens ein Grundgestell mit wenigstens einer Lagereinheit (22), einer darin gelagerten Welle (24) und einer damit verbundenen Abtragsscheibe (21) umfasst und wobei die Welle (24) über einen Motor (51) und/oder ein Getriebe rotierend oder schwingend angetrieben ist,
**dadurch gekennzeichnet,**
- **dass** bei dem Extruder an der Stirnseite (15) des Extrudergehäuses (10) wenigstens ein Lochmatrizenelement (11) mit mehreren Auslassausnehmungen angeordnet ist,
- und **dass** die Abtragsscheibe (21) zumindest an ihrer dem Lochmatrizenelement (19) zuzuwendenden Seite eine strukturierte Oberfläche besitzt.

2. Extrudat-Abtragsvorrichtung (20) nach Anspruch 1, **dadurch gekennzeichnet, dass** die strukturierte Oberfläche der Abtragsscheibe (21) eine waffeleisenförmige Struktur mit Pyramidenstümpfen besitzt, die in einer Rasterstruktur angeordnet sind.

3. Extrudat-Abtragsvorrichtung (20) nach Anspruch 1 oder 2, **dadurch gekennzeichnet, dass** die strukturierte Oberfläche eine Rauhtiefe von wenigstens 3 mm besitzt.

4. Extrudat-Abtragsvorrichtung (20) nach einem der vorhergehenden Ansprüche, **dadurch gekennzeichnet, dass** unterhalb der wenigstens einen Abtragsscheibe (21) eine Fördereinrichtung (30) angeordnet ist.

5. Extrudat-Abtragsvorrichtung (20) nach einem der vorhergehenden Ansprüche, **gekennzeichnet durch** eine Abstandsverstelleinrichtung, über welche das Grundgestell am Extrudergehäuse (10) befestigbar ist.

6. Extrudat-Abtragsvorrichtung (20) nach einem der vorhergehenden Ansprüche, **dadurch gekennzeichnet,**
- **dass** das Grundgestell ein am Extrudergehäuse anzubringendes Basiselement (61) mit wenigstens zwei Führungsachsen (62) sowie eine Grundplatte (25) umfasst, an der wenigstens zwei Führungsbuchsen (63) zur Führung der Führungsachsen (62) vorgesehen sind, und
- **dass** wenigstens ein Linearaktorelement vorgesehen ist, das am Basiselement (61) oder an der Grundplatte (25) angeordnet ist und sich mit einem ausfahrbaren Stempel an dem jeweils anderen Element abstützt.

7. Extruder (100) wenigstens umfassend ein Extrudergehäuse (10) mit einer Extruderschneckenbohrung (13), in welcher wenigstens zwei Extruderschneckenwellen (12) drehbar gelagert sind und welche an einer Stirnseite (15) des Extrudergehäuses (10) an wenigstens einem Lochmatrizenelement (11) mündet, welches mehrere Auslassausnehmungen umfasst, sowie eine vor der Stirnseite (15) des Extrudergehäuses (10) angeordnete Extrudat-Abtragsvorrichtung (20) nach einem der vorhergehenden Ansprüche, wobei die Abtragsscheibe (21) parallel zu dem Lochmatrizenelement (11) angeordnet ist.

8. Extruder (100) nach Anspruch 7, **dadurch gekennzeichnet, dass** an dem Extrudergehäuse (10) je Schneckenwelle (12) jeweils ein Lochmatrizenelement (11) eingesetzt ist und dass je eine Abtragsscheibe (21) vor jedem Lochmatrizenelement (11) angeordnet ist.

9. Extruder (100) nach Anspruch 8, **dadurch gekennzeichnet,**
- **dass** für beide Extruderschneckenwellen (12) ein gemeinsames Lochmatrizenelement vorgesehen ist, das vor beiden Extruderschneckenwellen (12) jeweils mehrere Auslassausnehmungen besitzt, und
- **dass** die Extrudat-Abtragsvorrichtung (20) eine Abtragsscheibe (21) umfasst, die den gesamten Umfang der Auslassausnehmungen an dem gemeinsamen Lochmatrizenelement überdeckt.

10. Extruder (100) nach einem der Ansprüche 7 bis 9, **dadurch gekennzeichnet, dass** an der Stirnseite (15) des Extrudergehäuses (10), vor oder an dem Lochmatrizenelement (11), wenigstens eine Senkung (14) ausgebildet ist, in der die wenigstens eine Abtragsscheibe (21) mit wenigstens einem Teil ihrer Wandstärke positionierbar ist.

11. Extruder (100) nach einem der Ansprüche 7 bis 10, **dadurch gekennzeichnet,**
- **dass** die Extrudat-Abtragsvorrichtung (20) eine Abstandsverstelleinrichtung besitzt und der axiale Abstand der wenigstens einen Abtragsscheibe (21) gegenüber der Außenseite des Lochmatrizenelements (11) verstellbar ist;
- **dass** die Abstandsverstelleinrichtung ein am Extrudergehäuse anzubringendes Basiselement (51) mit wenigstens zwei Führungsachsen (52) sowie eine Grundplatte (25) umfasst, die verschiebbar auf den Führungsachsen gelagert ist und
- **dass** das Lochmatrizenelement (11) an dem Basiselement (51) angebracht ist.

12. Extruder (100) nach einem der vorhergehenden Ansprüche 7 bis 11,
**dadurch gekennzeichnet, dass** die Außenseite des Lochmatrizenelements (11) eine strukturierte Oberfläche besitzt.

13. Extruder (100) nach einem der vorhergehenden Ansprüche 7 bis 12,
**dadurch gekennzeichnet, dass** das Lochmatrizenelement eine beidseitig strukturierte Oberfläche besitzt.

## Claims

1. Extrudate removal device (20) for an extruder (100) for processing substrates of organic residual and raw materials, wherein the extrudate removal device (20) comprises at least one base frame with at least one bearing unit (22), a shaft (24) mounted therein and a removal disc (21) connected thereto and wherein the shaft (24) is driven in a rotating or oscillating manner by way of a motor (51) and/or a gear mechanism,
**characterized**
- **in that**, in the case of the extruder, at least one perforated die element (11) with multiple outlet clearances is arranged on the end face (15) of the extruder barrel (10),
- and **in that** the removal disc (21) has at least one structured surface on its side that is to be turned towards the perforated die element (19).

2. Extrudate removal device (20) according to Claim 1, **characterized in that** the structured surface of the removal disc (21) has a structure in the form of a waffle iron with truncated pyramids, which are arranged in a grid structure.

3. Extrudate removal device (20) according to Claim 1 or 2, **characterized in that** the structured surface has a roughness height of at least 3 mm.

4. Extrudate removal device (20) according to one of the preceding claims, **characterized in that** a conveying device (30) is arranged under the at least one removal disc (21).

5. Extrudate removal device (20) according to one of the preceding claims, **characterized by** a distance adjusting device, by way of which the base frame can be fastened on the extruder barrel (10).

6. Extrudate removal device (20) according to one of the preceding claims, **characterized**
- **in that** the base frame comprises a basic element (61) with at least two guide pins (62) to be attached to the extruder barrel and also a base plate (25), in which at least two guide bushings (63) for guiding the guide pins (62) are provided, and
- **in that** at least one linear actuator element is provided, arranged on the base element (61) or on the base plate (25) and supported on the other element respectively by an extendable prop.

7. Extruder (100), at least comprising an extruder barrel (10) with an extruder screw bore (13), in which at least two extruder screw shafts (12) are rotatably mounted and which opens out at an end face (15) of the extruder barrel (10) onto at least one perforated die element (11), which comprises multiple outlet clearances, and also comprising an extrudate removal device (20) according to one of the preceding claims arranged upstream of the end face (15) of the extruder barrel (10), wherein the removal disc (21) is arranged parallel to the perforated die element (11).

8. Extruder (100) according to Claim 7, **characterized in that** one perforated die element (11) is respectively used for each screw shaft (12) on the extruder barrel (10) and **in that** a removal disc (21) is respectively arranged upstream of each perforated die element (11).

9. Extruder (100) according to Claim 8, **characterized**
- **in that** a common perforated die element is provided for both extruder screw shafts (12), respectively having multiple outlet clearances upstream of both extruder screw shafts (12), and
- **in that** the extrudate removal device (20) comprises a removal disc (21), which covers the entire circumference of the outlet clearances on the common perforated die element.

10. Extruder (100) according to one of Claims 7 to 9, **characterized in that** at least one countersink (14), in which the at least one removal disc (21) can be positioned with at least part of its wall thickness, is formed on the end face (15) of the extruder barrel (10), upstream of or at the perforated die element (11).

11. Extruder (100) according to one of Claims 7 to 10, **characterized**
- **in that** the extrudate removal device (20) has a distance adjusting device and the axial distance of the at least one removal disc (21) from the outer side of the perforated die element (11) is adjustable;
- **in that** the distance adjusting device comprises a basic element (51), which is to be attached to the extruder barrel and has at least two guide pins (52) and also a base plate (25), which is displaceably mounted on the guide pins, and
- **in that** the perforated die element (11) is attached to the basic element (51).

12. Extruder (100) according to one of the preceding Claims 7 to 11, **characterized in that** the outer side of the perforated die element (11) has a structured surface.

13. Extruder (100) according to one of the preceding Claims 7 to 12, **characterized in that** the perforated die element has a surface that is structured on both sides.

## Revendications

1. Dispositif d'enlèvement d'extrudat (20) pour une extrudeuse (100), destiné à traiter des substrats composés de résidus organiques et de matières premières,
le dispositif d'enlèvement d'extrudat (20) comprenant au moins un cadre de base muni d'au moins une unité de palier (22), d'un arbre (24) logé dans celle-ci et d'un disque d'enlèvement (21) relié à celle-ci, et l'arbre (24) étant entraîné en rotation ou en oscillation par un moteur (51) et/ou une transmission,
**caractérisé en ce que**
- sur l'extrudeuse, au moins un élément de matrice de poinçonnage (11), muni de plusieurs évidements de sortie, est disposé sur la face frontale (15) du boîtier d'extrudeuse (10),
- et le disque d'enlèvement (21) possède une surface structurée au moins sur sa face à tourner vers l'élément de matrice de poinçonnage (19).

2. Dispositif d'enlèvement d'extrudat (20) selon la revendication 1, **caractérisé en ce que** la surface structurée du disque d'enlèvement (21) possède une structure gaufrée avec des pyramides tronquées qui sont disposées dans une structure de grille.

3. Dispositif d'enlèvement d'extrudat (20) selon la revendication 1 ou 2, **caractérisé en ce que** la surface structurée possède une profondeur de rugosité d'au moins 3 mm.

4. Dispositif d'enlèvement d'extrudat (20) selon l'une quelconque des revendications précédentes, **caractérisé en ce qu'**un dispositif de transport (30) est disposé au-dessous dudit au moins un disque d'enlèvement (21).

5. Dispositif d'enlèvement d'extrudat (20) selon l'une quelconque des revendications précédentes, **caractérisé par** un dispositif de réglage de distance par lequel le cadre de base peut être fixé au boîtier d'extrudeuse (10).

6. Dispositif d'enlèvement d'extrudat (20) selon l'une quelconque des revendications précédentes, **caractérisé en ce que**
- le cadre de base comprend un élément de base (61) avec au moins deux axes de guidage (62), à fixer au boîtier d'extrudeuse, ainsi qu'une plaque de base (25) sur laquelle sont prévues au moins deux douilles de guidage (63) pour guider les axes de guidage (62), et
- au moins un élément d'actionneur linéaire est prévu, qui est disposé sur l'élément de base (61) ou sur la plaque de base (25) et prend appui sur l'autre élément respectif par un poinçon extensible.

7. Extrudeuse (100), comprenant au moins un boîtier d'extrudeuse (10) muni d'un perçage de vis d'extrusion sans fin (13) dans lequel au moins deux arbres de vis d'extrusion sans fin (12) sont montés en rotation et qui débouche sur une face frontale (15) du boîtier d'extrudeuse (10) sur au moins un élément de matrice de perçage (11) qui comprend plusieurs évidements de sortie, ainsi qu'un dispositif d'enlèvement d'extrudat (20) selon l'une quelconque des revendications précédentes, disposé devant la face frontale (15) du boîtier d'extrudeuse (10), le disque d'enlèvement (21) étant disposé en parallèle à l'élément de matrice de poinçonnage (11).

8. Extrudeuse (100) selon la revendication 7, **caractérisée en ce que** sur le boîtier d'extrudeuse (10), respectivement un élément de matrice de poinçonnage (11) est inséré pour chaque arbre de vis sans fin (12), et **en ce que** respectivement un disque d'enlèvement (21) est disposé devant chaque élément de matrice de poinçonnage (11).

9. Extrudeuse (100) selon la revendication 8, **caractérisée en ce que**
- pour les deux arbres de vis d'extrusion sans fin (12), un élément de matrice de poinçonnage commun est prévu, qui possède plusieurs évidements de sortie respectivement devant les deux arbres de vis d'extrusion sans fin (12), et
- le dispositif d'enlèvement d'extrudat (20) comprend un disque d'enlèvement (21) qui recouvre la circonférence entière des évidements de sortie sur l'élément de matrice de poinçonnage commun.

10. Extrudeuse (100) selon l'une quelconque des revendications 7 à 9, **caractérisée en ce que** sur la face frontale (15) du boîtier d'extrudeuse (10), devant ou sur l'élément de matrice de poinçonnage (11), au moins un creux (14) est réalisé dans lequel ledit au moins un disque d'enlèvement (21) peut être positionné par au moins une partie de son épaisseur de paroi.

11. Extrudeuse (100) selon l'une quelconque des revendications 7 à 10, **caractérisée en ce que**
- le dispositif d'enlèvement d'extrudat (20) possède un dispositif de réglage de distance et la distance axiale dudit au moins un disque d'enlèvement (21) est réglable par rapport à la face extérieure de l'élément de matrice de poinçonnage (11) ;
- le dispositif de réglage de distance comprend un élément de base (51) à installer sur le boîtier d'extrudeuse avec au moins deux axes de guidage (52) ainsi qu'une plaque de base (25) qui est montée mobile sur les axes de guidage, et
- l'élément de matrice de poinçonnage (11) est installé sur l'élément de base (51).

12. Extrudeuse (100) selon l'une quelconque des revendications précédentes 7 à 11, **caractérisée en ce que** la face extérieure de l'élément de matrice de poinçonnage (11) possède une surface structurée.

13. Extrudeuse (100) selon l'une quelconque des revendications précédentes 7 à 12, **caractérisée en ce que** l'élément de matrice de poinçonnage possède une surface structurée des deux côtés.
